# FASCICULE DE BREVET EUROPEEN

(11) **EP 1 666 678 B1**
(45) Date de publication et mention de la délivrance du brevet: **18.11.2009**
(21) Numéro de dépôt: 05292402.4
(22) Date de dépôt: 14.11.2005
(51) Int. Cl.: E04B 5/26

(54) **Entrevous isolant de plancher en matériau plastique expansé et son procédé de fabrication**
Isolierendes Füllelement aus expandierten plastischen Material für Decken und Verfahren zu seiner Herstellung
Insulating floor filler element of expanded plastic material and its method of manufacture

(30) Priorité: 03.12.2004 FR 0412859
(43) Date de publication de la demande: 07.06.2006
(73) Titulaire: ISOBOX TECHNOLOGIES, 92024 Nanterre Cedex (FR)
(72) Inventeur: Barbarit, André, 94120 Fontenay Sous Bois (FR)
(74) Mandataire: Jacquard, Philippe Jean-Luc

(56) Documents cités:
- WO-A-98/16703
- DE-A1- 10 202 180
- FR-A- 2 355 635
- FR-A- 2 626 030

## Description

La présente invention a pour objet un entrevous isolant de plancher en matière plastique expansée, notamment en polystyrène.

Le Brevet FR 2 626 030 concerne un entrevous qui est d'un type antérieurement connu où les becquets présentent en sous-face des renforts constitués par une pellicule mince rapportée.

De tels becquets sont présents pour la réalisation de planchers pour lesquels les poutrelles en béton précontraint sont démunies de couture, l'ancrage de la dalle en béton sur les poutrelles étant alors obtenu par des talons de la dalle qui résultent de la forme particulière desdits becquets d'appui des entrevous sur les poutrelles.

Selon ce Brevet, cette pellicule mince rapportée est une résine ou un vernis rapporté par pulvérisation, pistoletage, enduction au pinceau, etc...

Ces entrevous conviennent pour des poutrelles standard de hauteur 110 mm, mais ils ne peuvent être utilisés avec des poutrelles de hauteur inférieure, car l'épaisseur des becquets doit être réduite. Il faut dans ce cas renforcer la résistance des becquets de hauteur réduite pour conserver une charge de rupture de l'entrevous compatible avec l'utilisation.

La présente invention concerne un entrevous dans lequel les renforts ne sont pas rapportés, mais sont au contraire réalisés dans la masse en créant des zones superficielles durcies par surchauffe localisée de la matière plastique expansée.

On obtient ainsi dans la masse des renforts en sous-face qui sont plus performants que les renforts rapportés connus, ce qui permet en particulier de réduire l'épaisseur des poutrelles qui est actuellement 110 mm, (en réalité 108 mm) pour atteindre l'épaisseur de poutrelles alignées dites de 90 mm (en réalité 94 mm), en réduisant l'épaisseur des appuis ou becquets, qui dans ce cas passent de 35 mm à 21 mm, tout en satisfaisant au test CSTB de charge de rupture de l'entrevous (150 daN), au test dit de la semelle articulée.

L'invention concerne ainsi un entrevous isolant de plancher, en matière plastique expansée, notamment en polystyrène comportant des becquets d'appui propres à reposer sur les talons des poutrelles de plancher et des renforts ménagés sur au moins les surfaces inférieures des becquets et les surfaces adjacentes à celles-ci destinées à venir au contact des talons des poutrelles caractérisé en ce que les renforts sont constitués par des régions superficielles durcies de ladite matière plastique expansée.

L'invention peut être en particulier en polystyrène expansé de densité comprise entre 14 et 30 g/l et par exemple égale à 20 g/l.

Selon un mode de réalisation préféré lui permettant de coopérer avec des poutrelles allégées de hauteur réduite inférieure à 100 mm, il présente des becquets d'épaisseur inférieur à 35 mm et notamment égale à 21 mm pour une poutrelle de hauteur 90 pour respecter les préconisations du CSTB.

On notera que le terme "hauteur 110" utilisé dans le bâtiment désigne en réalité une hauteur de 108 mm, et que le terme "hauteur 90" désigne en fait une hauteur de 94 mm.

L'invention concerne également un plancher de type à "dérogation couture" qui comporte de entrevous tels que définis ci-dessus.

L'invention concerne également un procédé de fabrication par moulage d'un entrevous tel que défini ci-dessus, caractérisé en ce qu'il met en oeuvre, au cours du moulage, une surchauffe localisée des surfaces à renforcer, à savoir au moins desdites surfaces inférieures des becquets et éventuellement desdites surfaces adjacentes à celles-ci.

La surchauffe localisée consiste à soumettre au moins lesdites surfaces à renforcer à une élévation de température de l'ordre de 30°C à 70°C par rapport à la température de moulage (100 à 110°C environ pour le polystyrène expansé en billes).

Cette élévation de température peut être maintenue pendant une durée comprise entre 2 et 30 secondes et plus particulièrement entre 10 et 20 secondes.

Selon un mode de réalisation préféré, cette surchauffe est obtenue par circulation de vapeur surchauffée dans au moins un conduit ménagé dans le moule à proximité desdites surfaces à renforcer.

D'autres caractéristiques et avantages de l'invention apparaîtront mieux à la lecture de la description qui va suivre, donnée à titre d'exemple non limitatif, en liaison avec les dessins dans lesquels :
- la figure 1 représente un entrevous de l'art antérieur ;
- les figures 2a à 2d représentant un entrevous selon l'invention respectivement en perspective, en vue de dessus, en coupe AA et en coupe BB;
- les figures 3a et 3b représentent un entrevous selon l'invention équipant respectivement une poutrelle de hauteur 90 et de hauteur 110 ;
- et la figure 4 illustre un conduit de vapeur surchauffée dans un moule adapté au procédé selon l'invention.

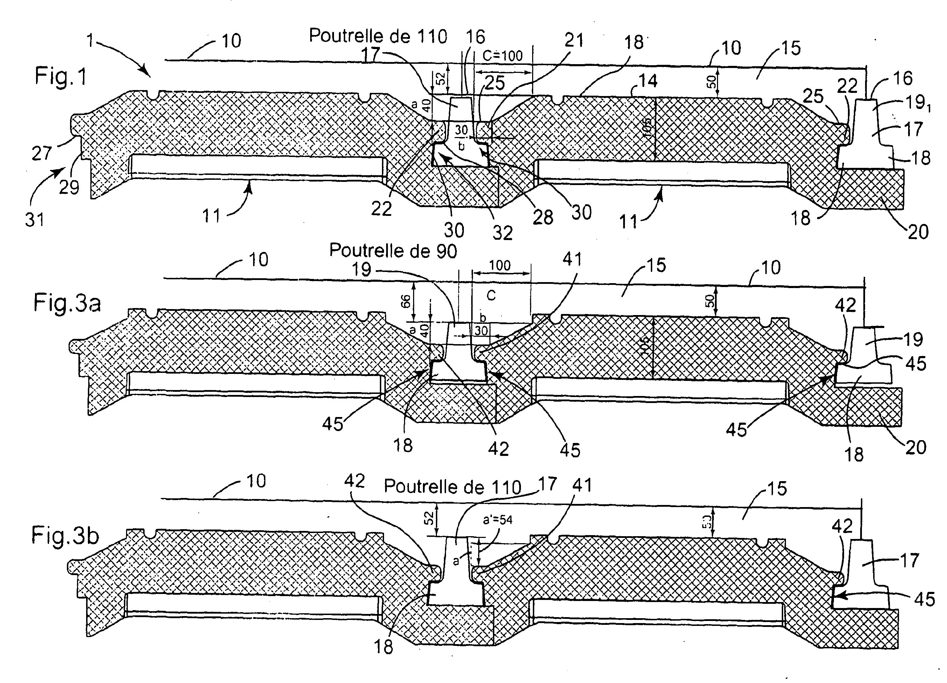

Un plancher 1 à entrevous comprenant des entrevous 11 est représenté à la figure 1.

Il comporte des poutrelles 17 en treillis métallique, ou plus particulièrement en béton précontraint, armé par des armatures longitudinales, et éventuellement des coutures destinées à l'ancrage d'une dalle de béton 15 elle-même armée par un treillis métallique.

La dalle de béton 15 est coulée jusqu'à un niveau 10, en utilisant les entrevous 11 en tant qu'éléments de coffrage, les entrevous 11 procurant en outre au plancher terminé des caractéristiques thermiques et phoniques souhaitées.

Les entrevous 11 sont constitués de blocs de matière plastique expansée, avantageusement du polystyrène, et moulés à la vapeur.

Ils sont conformés le long de leurs rives par des becquets 21 et 22 d'appui sur les talons 18 de deux poutrelles adjacentes 17.

L'utilisation des entrevous 11 est subordonnée au respect de la caractéristique de résistance à la rupture (150 daN) selon les préconisations du CSTB. Le respect de cette valeur est conditionné principalement par la résistance mécanique des becquets 21 et 22.

Pour les planchers sans couture (dits du type à dérogation couture), il faut, pour respecter les préconisations du CSTB, que subsiste entre la face supérieure 25 des becquets 21 et 22 et la face supérieure 16 des poutrelles 17, une cote a au moins égale à 40 mm. La largeur b des becquets est généralement de 30 mm alors que la longueur c entre le bord 191 de la face supérieure 19 de la poutrelle 17 et le bord 141 de la face supérieure 14 de l'entrevous est généralement égal à 100 mm, pour un plancher du type à dérogation de couture.

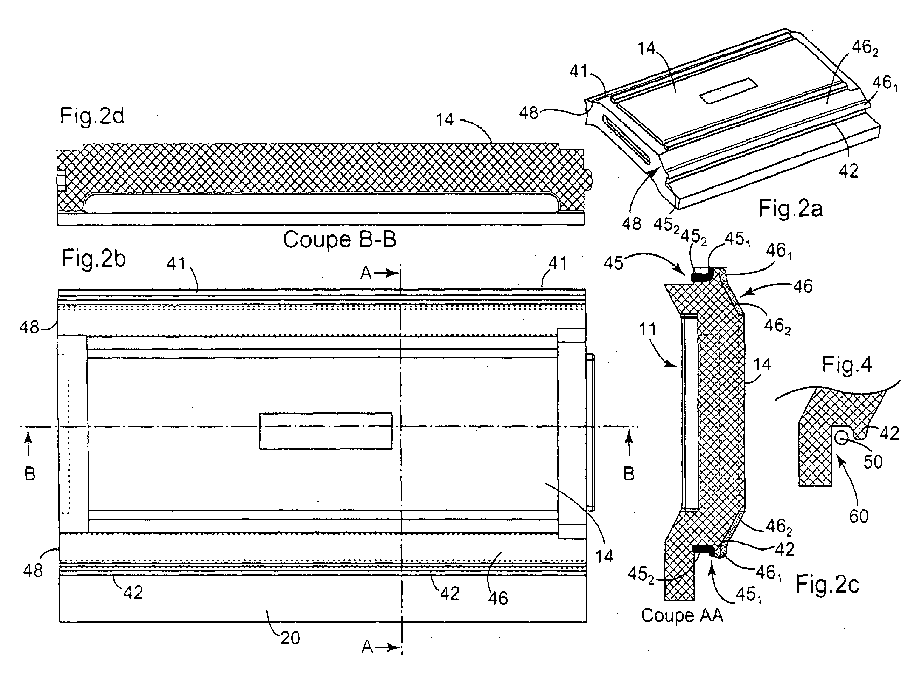

Selon les figures 2a à 2c, un entrevous selon l'invention présente au moins en sous-face des becquets 41 et 42, deux zones renforcées 45 obtenues dans la masse par surchauffe lors du moulage.

On peut réaliser seulement des renforts 45₁ dans la zone horizontale en sous-face des becquets 41 et 42. Il est cependant préférable de réaliser des renforts 45₂ sur la paroi verticale adjacente à la sous-face des becquets 41 et 42. Avantageusement, on peut compléter le renforcement par des régions 46 à la face supérieure des becquets 41 et 42 (renfort 46₁) et/ou dans le zone de pente 48 entre les becquets 41 et 42 et la face supérieure 14 de l'entrevous 11 (renfort 46₂)

Par rapport à la température du moulage (100°C à 110°C pour du polystyrène expansé) à laquelle les billes ramollissent pour se souder ensuite, cette surchauffe est de l'ordre de 20°C à 30°C, ce qui permet une fusion locale et une prise en masse et elle est appliquée pendant 2 à 30 secondes et plus particulièrement entre 10 et 20 secondes. Plus l'amplitude de la surchauffe est importante, et plus la durée d'application est longue, plus l'épaisseur des renforts 45 ou 46 ainsi obtenus est élevée et plus les becquets 41 et 42 sont résistants. Le temps de cycle du moulage d'un entrevous est de l'ordre de 2 à 3 minutes en général. La surchauffe peut être notamment appliquée en début de cycle, notamment par circulation de vapeur surchauffée dans un ou plusieurs conduits ménagés dans le moule et jouxtant les régions à renforcer. Le moule étant en métal, la transmission de chaleur est quasi-instantanée et la surface de l'entrevous est localement surchauffée avec une grande efficacité. On conserve le minimum de distance (par exemple 2 à 3 millimètres) entre le ou les conduits, de forme cylindrique ou aplatie, qui soit compatible avec la tenue mécanique du moule.

Par exemple avec une surchauffe de 30°C à 70°C appliquée pendant 10 à 20 secondes, on obtient des renforts refondus d'épaisseur comprise entre environ 0,1 mm et 1 mm.

La seule adaptation que nécessite le moule est l'adjonction d'un conduit 50 de vapeur surchauffée dans la paroi du moule 60 (voir figure 4).

Dans l'art antérieur (figure 1), la poutrelle dite de 110 a une hauteur effective de 108 mm. Les becquets 21 et 22 ont une hauteur de 35 mm pour respecter la cote verticale a = 40 mm.

Dans le cas de l'invention, figures 3a et 3b, on a :
- avec une poutrelle de hauteur 90 dont la hauteur réelle est 94 mm, les becquets 41 et 42 ont une hauteur de 21 mm pour que puisse toujours être respectée la cote a = 40 mm ;
- avec une poutrelle de hauteur 110, les becquets 41 et 42 de hauteur 21 mm permettent de dépasser la valeur préconisée de la cote a (40 mm) pour la porter à 54 mm, ce qui augmente les zones trapézoïdales de côtés a, b, c d'ancrage où la dalle 15 d'épaisseur 50 mm est en contact avec la poutrelle 17 et les entrevous 11.

## Revendications

1. Entrevous isolant de plancher en matière plastique expansée, notamment en polystyrène comportant des becquets d'appui propres à reposer sur les talons des poutrelles de plancher et des renforts ménagés sur au moins les surfaces inférieures des becquets et éventuellement les surfaces adjacentes à celles-ci destinées à venir au contact des talons des poutrelles, **caractérisé en ce que** les renforts (45) sont constitués par des régions superficielles durcies de ladite matière plastique expansée.

2. Entrevous selon la revendication 1, **caractérisé en ce qu'**il est en polystyrène de densité de l'ordre de 20 g/l.

3. Entrevous selon une des revendications 1 ou 2, **caractérisé en ce qu'**il présente des becquets (41,42) une épaisseur réduite inférieure à 35 mm, par exemple 21 mm, pour coopérer avec des poutrelles allégées (19) de hauteur inférieure à 110 mm, et notamment égale à 90 mm.

4. Entrevous selon une des revendications précédentes, **caractérisé en ce que** lesdits renforts (46) sont également réalisés à la face supérieure des becquets (41, 42) et/ou sur une face inclinée (48) entre les becquets (41, 42) et la face supérieure de l'entrevous (11).

5. Plancher type à « dérogation couture », **caractérisé en ce qu'**il comporte des entrevous selon une des revendications précédentes.

6. Procédé de fabrication par moulage d'un entrevous selon une des revendications 1 à 4, **caractérisé en ce qu'**il met en oeuvre, au cours du moulage, une surchauffe localisée des surfaces à renforcer, à savoir au moins desdites surfaces inférieures des becquets et éventuellement desdites surfaces adjacentes à celles-ci.

7. Procédé selon la revendication 6, **caractérisé en ce que** ladite surchauffe localisée consiste à soumettre au moins lesdites surfaces à renforcer à une élévation de température de l'ordre de 30°C à 70°C par rapport à la température de moulage.

8. Procédé selon la revendication 7, **caractérisé en ce que** la température de moulage est comprise entre environ 100 et 110°C.

9. Procédé selon une des revendications 7 ou 8, **caractérisé en ce que** ladite élévation de température est maintenue pendant une durée comprise entre 2 et 30 secondes et plus particulièrement entre 10 et 20 secondes.

10. Procédé selon l'une des revendications 6 à 9, **caractérisé en ce que** ladite surchauffe est obtenue par circulation de vapeur surchauffée dans au moins un tube (50) ménagé dans le moule (60) à proximité desdites surfaces à renforcer.

## Claims

1. Insulating floor filler element made of expanded plastics, particularly of polystyrene, comprising support shoulders adapted to rest on the beads of the floor joists and reinforcements provided on at least the lower surfaces of the shoulders and optionally the surfaces adjacent thereto which are intended to come into contact with the beads of the joists, **characterised in that** the reinforcements (45) consist of hardened surface regions of said expanded plastics.

2. Filler element according to claim 1, **characterised in that** it is made of polystyrene with a density of the order of 20 g/l.

3. Filler element according to one of claims 1 or 2, **characterised in that** it has shoulders (41, 42) of a reduced thickness of less than 35 mm, for example 21 mm, to cooperate with thinned joists (19) of a height of less than 110 mm; and particularly equal to 90 mm.

4. Filler element according to one of the preceding claims, **characterised in that** the reinforcements (46) are also formed on the upper surface of the shoulders (41, 42) and/or on an inclined surface (48) between the shoulders (41, 42) and the upper surface of the filler element (11).

5. Floor of the "seam-free" type, **characterised in that** it comprises filler elements according to one of the preceding claims.

6. Method of producing a filler element according to one of claims 1 to 4 by moulding, **characterised in that** it involves, during the moulding, localised superheating of the surfaces that are to be reinforced, namely at least the said lower surfaces of the shoulders and optionally the said surfaces adjacent thereto.

7. Method according to claim 6, **characterised in that** the said localised superheating consists in subjecting at least the surfaces which are to be reinforced to a rise in temperature of the order of 30°C to 70°C in relation to the moulding temperature.

8. Method according to claim 7, **characterised in that** the moulding temperature is between about 100 and 110°C.

9. Method according to one of claims 7 or 8, **characterised in that** the said rise in temperature is maintained for a period of between 2 and 30 seconds and more particularly between 10 and 20 seconds.

10. Method according to one of claims 6 to 9, **characterised in that** the said superheating is obtained by circulating superheated steam in at least one tube (50) provided in the mould (60) close to said surfaces to be reinforced.

## Patentansprüche

1. Isolierendes Füllelement für Decken aus expandiertem plastischen Material, insbesondere aus Polystyrol, umfassend Stützflansche zum Abstützen derselben auf den Absätzen von Deckenträgern und Verstärkungen auf wenigstens den unteren Oberflächen der Flansche und gegebenenfalls auf an diese angrenzenden Oberflächen, die dazu vorgesehen sind, in Kontakt mit den Absätzen der Träger zu gelangen, **dadurch gekennzeichnet, dass** die Verstärkungen (45) aus gehärteten Oberflächenbereichen des expandierten plastischen Materials bestehen.

2. Füllelement nach Anspruch 1, **dadurch gekennzeichnet, dass** das Polystyrol eine Dichte in der Größenordnung von 20g/l aufweist.

3. Füllelement nach Anspruch 1 oder 2, **dadurch gekennzeichnet, dass** die Flansche (41, 42) eine reduzierte Dicke von weniger als 35 mm aufweisen, beispielsweise 21 mm, um mit Trägern (19) mit einer verringerten Höhe von weniger als 110 mm und insbesondere gleich 90 mm zusammenzuwirken.

4. Füllelement nach einem der vorhergehenden Ansprüche, **dadurch gekennzeichnet, dass** die Verstärkungen (46) auch an der oberen Seite der Flansche (41,42) und/oder auf einer geneigten Seite zwischen den Flanschen (41,42) und der Oberseite des Füllelements (11) vorgesehen sind.

5. Decke in einer Ausführung mit "Nahtversatz", **dadurch gekennzeichnet, dass** sie Füllelemente gemäß einem der vorhergehenden Ansprüche umfasst.

6. Verfahren zur Herstellung durch Formgießen eines Füllelements nach einem der Ansprüche 1 bis 4, **dadurch gekennzeichnet, dass** während des Formgießens ein örtlich begrenztes Überhitzen der zu verstärkenden Oberflächen eingeleitet wird, und zwar mindestens der unteren Oberflächen der Flansche und gegebenenfalls der an diese angrenzenden Oberflächen.

7. Verfahren nach Anspruch 6, **dadurch gekennzeichnet, dass** die örtlich begrenzte Überhitzung darin besteht, zumindest die zu verstärkenden Oberflächen einem Temperaturanstieg in der Größenordnung von 30°C bis 70°C im Vergleich zur Formgusstemperatur zu unterwerfen.

8. Verfahren nach Anspruch 7, **dadurch gekennzeichnet, dass** die Formgusstemperatur ungefähr zwischen 100 und 110°C beträgt.

9. Verfahren nach einem der Ansprüche 7 oder 8, **dadurch gekennzeichnet, dass** die Temperaturerhöhung über einen Zeitraum von zwischen 2 und 30 Sekunden, vorzugsweise zwischen 10 und 20 Sekunden, gehalten wird.

10. Verfahren nach einem der Ansprüche 6 bis 9, **dadurch gekennzeichnet, dass** die Überhitzung durch Zirkulieren überhitzten Dampfes durch wenigstens eine Röhre (50) erhalten wird, die in der Nähe der zu verstärkenden Oberflächen in der Form (60) angebracht ist.
